# EUROPÄISCHE PATENTSCHRIFT

(11) **EP 1 920 287 B1**
(45) Veröffentlichungstag und Bekanntmachung des Hinweises auf die Patenterteilung: **21.11.2012**
(21) Anmeldenummer: 06754717.4
(22) Anmeldetag: 12.07.2006
(51) Int. Cl.: G02B 23/12, G02B 26/08, G02B 23/04, G02B 23/10

(54) **TAG-NACHTSICHTGERÄT**
DAY/NIGHT-VISION DEVICE
APPAREIL DE VISION DIURNE/NOCTURNE

(30) Priorität: 14.07.2005 EP 05106494; 14.07.2005 US 180587
(43) Veröffentlichungstag der Anmeldung: 14.05.2008
(73) Patentinhaber: Vectronix AG, 9435 Heerbrugg (CH)
(72) Erfinder: ZADRAVEC, Dusan, CH-9445 Rebstein (CH); WÄLTI, Felix, CH-9437 Marbach (CH)
(74) Vertreter: Kaminski Harmann
(86) Internationale Anmeldenummer: PCT/EP2006/006816
(87) Internationale Veröffentlichungsnummer: WO 2007/006563

(56) Entgegenhaltungen:
- DE-A1- 3 329 589
- GB-A- 472 808
- GB-A- 1 405 122
- US-A- 4 175 825
- US-A- 5 157 548

## Beschreibung

Die Erfindung betrifft ein Tag-Nachtsichtgerät nach dem Oberbegriff des Anspruchs 1, und insbesondere ein monokulares Tag-Nachtsichtgerät.

Tag-Nachtsichtgeräte kommen besonders für militärische Zwecke zum Einsatz, dabei ist wichtig, dass die Geräte handlich, schnell und einfach zu bedienen und möglichst kompakt und leicht sind. Während es früher üblich war, zwischen Tag- und Nachtsichtgerät je nach Bedarf zu wechseln bzw. das Tagsicht-Standardokular durch einen "Nachtsicht-Zusatz" zu ersetzen, werden heute bevorzugt kombinierte Geräte verwendet. Dies ist in vielerlei Hinsicht vorteilhaft, so wird z.B. ein Mittragen des Nachtsicht-Zusatzes überflüssig und der Wechsel zwischen dem Tag- und Nachtmodus des Geräts viel schneller.

Für ein Gerät mit sowohl Tag-, als auch Nachtsichtfunktion ist im Allgemeinen ein Aufbau mit zwei getrennten Kanälen - einem Tagsichtkanal und einem Nachtsichtkanal - üblich. Der Tagsichtkanal wird dabei im Allgemeinen in bekannter Art und Weise fernrohrartig aus Objektiv, optischen brechenden und reflektiven Elementen und Okular gebildet. Der Nachtsichtkanal ist meist nach im Wesentlichen denselben Prinzipien und zusätzlich einem Bildsensor - wie einem Lichtverstärker - und einem lichtstarken Objektiv aufgebaut. Bei einem Restlichtverstärker als Bildsensor fokussiert das Objektiv die von einem zu beobachtenden Objekt ausgehenden Strahlen auf das Eintrittsfenster desselben. Im Restlichtverstärker wird das Bild des Objektes elektronisch verstärkt, erscheint dadurch als helleres sichtbares Bild auf dem Austrittsfenster und wird über ein Okular ins Auge eines Beobachters projiziert.

Das Dokument US 4,175,825 beschreibt ein optisches Transmissionssystem mit zwei Kanälen für das einfallende Licht und einen schwenkbaren Spiegel, der zwischen den Einfallkanälen und dem Okular angeordnet ist. Abhängig von der Schwenkstellung des Spiegels findet eine ausschließliche Auswahl statt, aus welchem Kanal Licht auf das Okular gelenkt wird.

Oft sind für ein derartiges Tag-Nachtsichtgerät noch weitere Funktionen erwünscht. So kann beispielsweise ein Bild einer Kamera oder auch Standortinformation, z.B. in Form einer Karte, über ein Display in das Gerät eingespielt und mit dem jeweiligen - durch den Tag- oder Nachtsichtkanal zum Beobachter projizierten - Bild im Gerät überlagert werden. Nachteilig bei bekannten Geräten ist dabei, dass diese Zusatzfunktion zweimal bereitgestellt werden muss, einmal für die Tagsichtfunktion im Tagsichtkanal, bzw. über das Tagsicht-Okular und einmal für das Gerät in seiner Nachtsichtausbildung.

Das Dokument US 5,157,548 offenbart ein bildverbindendes optisches Gerät für die Tag- und Nachtsicht mit einem weiteren optischen Kanal, über den ein mittels eines bilderzeugenden Elements generiertes Zusatzbild überlagerbar ist.

Es ist eine Aufgabe der vorliegenden Erfindung, ein Tag-Nachtsichtgerät bereitzustellen, welches die Tagsicht- und Nachtsicht-Funktion mit weniger optischen Komponenten bereitstellt.

Eine weitere Aufgabe der Erfindung ist die Bereitstellung eines Gerätes, in welchem Gerät Zusatzinformation, insbesondere Bildinformation, mit ein und derselben Bereitstellung der Zusatzinformation sowohl mit Beobachtungen, welche mit dem Gerät in seiner Tagsicht-Funktion als auch in seiner Nachtsicht-Funktion durchgeführt werden, kombinierbar, insbesondere überlagerbar, ist.

Diese Aufgaben werden erfindungsgemäss durch die Merkmale des Anspruchs 1 bzw. der abhängigen Ansprüche gelöst oder die Lösungen weitergebildet.

Die Erfindung betrifft ein Tag-Nachtsichtgerät zur Beobachtung von Objekten. Das Gerät ist so ausgebildet, dass durch einen Tagsichtkanal - direkt oder indirekt - Beobachtungen, insbesondere bei Tageslicht, durchführbar sind und durch einen Nachtsichtkanal - direkt oder indirekt - Beobachtungen, insbesondere während der Nacht bzw. bei unzulänglichen Lichtverhältnissen. Erfindungsgemäss ist vorgesehen, die bei den jeweiligen Beobachtungen mittels des Geräts empfangene Lichtinformation dem Beobachter über einen gemeinsamen Empfangskanal und vorzugsweise über ein, gegebenenfalls im Empfangskanal angeordnetes, gemeinsames Okular zuzuführen. Insbesondere werden für die Zuführung gemeinsame optische Komponenten eingesetzt. Damit wird ein Gerät bereitgestellt, in welchem optische Komponenten sowohl für das Gerät im "Tagsicht-Modus" als auch im "Nachtsicht-Modus" verwendbar sind.

Weiters ist es mit einem Gerät in einer derartigen Ausbildung möglich, zusätzliche - z.B. auf ein graphisches Display im Gerät eingespeiste - Informationen, wie Messbilder, Orientierungs- oder Zielinformation, bei Tag- und Nachtbeobachtung dem jeweils beobachteten Bild eines Objektes oder einer Umgebung zu überlagern. Wird - wie erfindungsgemäss vorgesehen - sowohl das Tag- als auch das Nachtbild über denselben Empfangskanal empfangen, kann Zusatzinformation, wie Bildinformation, für das Gerät in seiner Tag- und Nachtsichtfunktion über denselben Weg eingespielt werden. Mit dem Einspielen von Zusatzinformation über denselben Weg sowohl für Tag-, als auch Nachtfunktion des Geräts, sind folglich in beiden Funktionen dieselben optischen und/oder elektronischen Komponenten zur Bereitstellung der Zusatzinformation verwendbar/einsetzbar.

Eine Weiterbildung der Erfindung sieht vor, über den Tagsicht- oder den Nachtsichtkanal empfangene Strahlung indirekt zu beobachten, indem die Strahlung auf eine im Gerät angeordnete Komponente zur Bereitstellung von Zusatzinformation, im Allgemeinen ein Display, gelenkt wird und von der Komponente als Zusatz-Bild zum Beobachter geleitet wird. In einer derartigen Ausführung des Tag-Nachtsichtgerät ist dem Beobachter - insbesondere bei Beobachtungen während der Nacht - in beiden Kanälen empfangene Strahlung über den gemeinsamen Empfangskanal verfügbar. Beispielsweise ist im Tagsichtkanal ein Wärmebildsensor angeordnet, der Wärmestrahlung detektiert und auf eine Aufnahme-/Anzeigevorrichtung spielt. Von dort wird das Bild in den Empfangskanal geleitet und dem Anwender als indirekte Tagsicht-Abbildung zur Verfügung gestellt. Im Nachtsichtkanal empfangenes Licht gelangt ebenfalls in den Empfangskanal und wird als direkte Nachtsicht-Abbildung bereitgestellt. Es wird an dieser Stelle darauf hingewiesen, dass die Bezeichnungen Tagsicht-Abbildung und Nachtsicht-Abbildung, sowie Tagsichtkanal und Nachtsichtkanal nicht ausschliesslich als Verknüpfung zu während des Tages oder während der Nacht empfangene Strahlung zu verstehen sind, sondern - beispielsweise wie oben beschrieben - auch über den Tagsichtkanal Beobachtungen während der Nacht möglich sind und umgekehrt. Die jeweilige Funktion ergibt sich für den Fachmann aus dem Zusammenhang, insbesondere dienen auch die Figuren dem besseren Verständnis.

Zum Lenken der jeweiligen "Strahlungsinformation" in Richtung einer Beobachtungsebene ist ein Umlenkmittel so ausgebildet und angeordnet, dass es als Umlenkmittel zum Lenken sowohl von im Tag- als auch im Nachtsichtkanal empfangener Strahlung in den Empfangskanal und gegebenenfalls gegen eine Okulareinheit einsetzbar - also als gemeinsame optische Komponente für Tag- und Nachtfunktion des Geräts verwendbar - ist. Das Umlenkmittel kann dabei z.B. ein Prisma mit einer, insbesondere für einen vorgegebenen Wellenlängenbereich, undurchlässigen Reflexionsschicht sein, an welcher Schicht eintreffende Strahlen in den Empfangskanal umgelenkt werden. Zum erfindungsgemässen Einsatz im Beobachtungsinstrument ist ein derartiges Prisma so ausgebildet, dass es einmal als Umlenkmittel für eine - direkte - Beobachtung über/durch den Tagsichtkanal und einmal als Umlenkmittel für eine - direkte - Beobachtung über/durch den Nachtsichtkanal verwendbar ist, z.B. ist das Prisma drehbar ausgebildet. Ist das Prisma zwischen Tag- und Nachtsichtkanal angeordnet, kann dasselbe bei einem Umschalten von Tagauf Nachtsicht bzw. vice versa z.B. um 180° um die optische Achse des Empfangskanals gedreht werden, und so ein Schalten vom Umlenkmittel für Beobachtungsstrahlen/Empfangsstrahlen des Tagsichtkanals zum Umlenkmittel für Beobachtungsstrahlen/Empfangsstrahlen des Nachtsichtkanals erfolgen. Gegebenenfalls sind Umlenkmittel und Okulareinheit drehbar ausgebildet, insbesondere auch als gemeinsam drehbare Einheit.

Durch Drehen des Umlenkmittels um einen bestimmten (Zwischen)Winkel von z.B. 90° werden die Beobachtungsstrahlen/Empfangsstrahlen sowohl des Tagsicht- als auch des Nachtsichtkanals unterdrückt. Damit wird es dem Anwender möglich, sich, beispielsweise, nur auf das Displaybild zu konzentrieren, ohne von Tag- resp. Nachtbildern gestört zu werden.

Weiter ist das Umlenkmittel derart ausgebildet, dass Zusatz-Bilder, d.h. zusätzliche Informationen in Form von Bildern, wie z.B. Wärmebilder oder Karten, welche z.B. von einem mit dem Tag-Nachsichtgerät mechanisch verbundenen und/oder mit demselben - über Kabel oder kabellose Verbindung - kommunizierenden Messmittel, wie einer Kamera oder einem GPS, in das Gerät übermittelbar sind, in den Empfangskanal desselben lenkbar sind. Ebenso ist - optische - Information interner Messmittel/Sensorelemente über das Umlenkmittel in den Empfangskanal leit- und/oder lenkbar. So ist das Umlenkmittel beispielsweise ein Strahlteiler mit einer für einen vorgegebenen (zweiten) Wellenlängenbereich durchlässigen Schicht. Es ist also z.B. möglich, am Tag-Nachtsichtgerät einen Empfänger für Wärmestrahlung - wie eine Wärmebildkamera - anzuordnen, ein Wärmebild der beobachteten Objekte oder Umgebung als Zusatz-Bild ins Gerät, z.B. auf ein Display im Gerät, zu spielen und über das Strahlteiler-Umlenkmittel in den Empfangskanal zum Beobachter zu leiten, wobei der dichroitische Strahlteiler eine für den Wellenlängenbereich des Displays durchlässige Schicht aufweist. So können sowohl Tag- als auch Nachtsicht-Beobachtungsbilder mit den Wärmebildern genau überlagert und als sozusagen fusionierte Bilder betrachtet werden. Es versteht sich, dass in derselben Art und Weise Aufnahmen in einem anderen Wellenlängenbereich zum Beobachter einspielbar sind.

Ist im Gerät ein graphisches oder halbgraphisches Display als Komponente zur Bereitstellung von Zusatzinformation angeordnet, können die von einem internen oder externen Empfänger, wie einer Wärmebildkamera oder einem GPS, aufgenommenen Bilder/Daten auf das Display eingespielt und von dort als Zusatz-Bilder/Informationen auf die Beobachtungsebene projiziert werden. Unter dem Begriff "Bild" sind in diesem Zusammenhang sowohl Beobachtungen/Aufnähmen von Objekten und/oder Szenen, als auch Messwerte, Daten, Karten, Graphiken, oder sonstige Informationen, die dem Beobachter als Abbildung - "Bild" - zugänglich gemacht werden, zu verstehen.

Sind entsprechende optische Komponenten des Geräts, insbesondere des Tagsicht- oder Nachtsichtkanals des Geräts, als für das Wärmespektrum durchlässig ausgebildet, kann ein interner Empfänger beispielsweise als Wärmebildsensor ausgeführt sein. Ein mittels des Wärmebildsensors aufgenommenes Bild ist auf das Display oder eine alternative Aufnahme-/Anzeigevorrichtung spielbar und von dort über das Umlenkmittel in den Empfangskanal und zum Beobachter. Dieser kann dann z.B. ein - direktes - Beobachtungs-Bild mit überlagertem Wärmebild - als indirektem Beobachtungsbild - betrachten. Eine solche Ausführung stellt beispielsweise eine zusätzliche indirekte Beobachtungsfunktion bereit.

In einer Ausführungsform ist das Tag-Nachtsichtgerät so ausgebildet, bzw. sind die optischen Komponenten des Geräts so ausgebildet und angeordnet, dass Tagsicht-Abbildung, Nachtsicht-Abbildung und zum Tag- oder Nachtbild eingespieltes, überlagertes oder fusioniertes Zusatz-Bild in der Abbildungsebene/Beobachtungsebene denselben Abbildungsmassstab haben. Dies ist realisierbar, indem für die unterschiedlichen Bilder die optischen Parameter bei der Bildprojektion angeglichen werden, beispielsweise durch Einbringen entsprechender optischer Komponenten in das Gerät. Auch sind die Bilder in ihren Abbildungseigenschaften anzugleichen, so liefert beispielsweise das graphische Display ein flaches Bild im Gegensatz zu im Allgemeinen gekrümmten Bildern aus dem Tag- und Nachtsichtkanal. Vorteilhaft werden diese Krümmungsverhältnisse über zusätzliche Krümmungslinsen zwischen dem Display und dem Okular an- bzw. ausgeglichen. In dieser Ausführungsform ist es dem Beobachter möglich, zwei oder mehr fusionierte Bilder, wie beispielsweise ein Tag- und ein Wärmebild, zu betrachten. Dies gilt natürlich gegebenenfalls genauso für eine Bildübertragung auf einen - an einen Ausgang des Geräts angeschlossenen - Monitor.

Im Tag-Nachtsichtgerät ist im Allgemeinen eine Okulareinheit vorgesehen, über welche beobachtete Bilder ins Auge des Anwenders projiziert werden. Diese Einheit kann - ebenso wie die erste bzw. zweite Objektiveinheit des Tag- bzw. Nachtsichtkanals - aus mehreren optischen Elementen, wie Konvex- und Konkavlinsen zusammengesetzt sein. Ausserdem kann sie - wie bereits erwähnt - drehbar - gegebenenfalls gemeinsam mit dem Umlenkmittel drehbar - ausgebildet sein. Das von Objekten ausgehende Licht wird in einer Ausführungsform des erfindungsgemässen Tag-Nachtsichtgeräts im Tag- und Nachtsichtkanal jeweils, über, im Allgemeinen mehrere, Objektivlinsen eingesammelt, mittels optischer Komponenten, wie Prismenelementen, planparallelen Platten, etc., zum Umlenkmittel geleitet und mittels desselben in den Empfangskanal bzw. zum Okular gelenkt, wo es als Tagsicht- oder Nachtsicht-Abbildung verfügbar ist.

Dem Nachtsichtkanal ist zusätzlich ein Bildsensor, insbesondere empfindlich für Strahlung im sichtbaren oder Infrarot-Bereich, zugeordnet. Ist der Sensor ein Lichtverstärker und als Restlichtverstärker ausgebildet, so wird Strahlung in bekannter Art und Weise auf ein Eintrittsfenster projiziert, im Restlichtverstärker verstärkt und erscheint als verstärktes grünes Bild am Austrittsfenster des Verstärkers. Von dort wird es über das Umlenkmittel - zur direkten Beobachtung - in den Empfangskanal gelenkt. Bei einem als EMCCD-Sensor oder EBCMOS-Sensor ausgebildeten Lichtverstärker wird das auftreffende Licht in ebenfalls bekannter Art und Weise verstärkt. Der Sensor (Chip) wird ausgelesen und die ausgelesene Information auf ein Display gespielt. Von dort wird das (Nacht-) Bild - wie oben beschrieben - über das Umlenkmittel - als indirektes Beobachtungsbild - in den Empfangskanal geleitet. Das Umlenkmittel weist dabei eine im entsprechenden Wellenlängenbereich durchlässige Schicht auf.

Eine Ausführungsform der Erfindung weist als Bildsensor einen Wärmebildsensor auf. Der Wärmebildsensor ist dabei - im Wesentlichen der Anordnung eines Lichtverstärkers entsprechend - im Nachtsichtkanal angeordnet. Vom Sensor aufgenommene Wärmebilder werden auf das Display gespielt. Vom Display sind die Bilder über das - entsprechend (teil)durchlässig ausgebildete - Umlenkmittel dem Beobachter zuführbar. Diese Ausführungsform stellt wiederum eine indirekte Beobachtungsvariante dar. Es versteht sich, dass in dieser Ausführungsform die optischen Elemente des Nachtsichtkanals als für Wärmestrahlung durchlässig ausgebildet sind. Ebenso versteht es sich, dass für die jeweiligen Ausführungsformen weitere optische und/oder elektronische Komponenten erforderlich sein können, die nicht gezeigt sind, deren Einsatz sich jedoch für einen Fachmann auf dem Gebiet zwecks Realisierbarkeit der jeweiligen Ausführungsformen als offensichtlich ergibt.

Das Okular oder die - meist aus mehreren Linsen zusammengesetzte - Okulareinheit kann im Empfangskanal angeordnet sein. Ebenso sind eine Anordnung ausserhalb des Empfangskanals und ein weiterer optischer Umlenker möglich. Es ist auch denkbar, zwei Okulare für eine zweiäugige Beobachtung einzusetzen. Eine monokulare Ausbildung eines Tag-Nachtsichtgeräts bringt jedoch beispielsweise den Vorteil mit sich, dass bei plötzlich erhöhter Lichteinwirkung - wie bei einem Blitz - durch das nicht durch das Gerät beobachtende Auge eine schnellere Reaktionsfähigkeit gegeben ist. Damit und durch die auch bei Dunkelheit immer noch bestehende Raumwahrnehmung des nicht-beobachtenden Auges ist das Gerät für den Anwender sicherer.

Für das Tag-Nachtsichtinstrument sind auch andere Empfangssysteme als ein Okularsystem denkbar, z.B. könnte Strahlung auf photosensitive Detektionselemente abgebildet und als Kamerabild betrachtet werden.

Im erfindungsgemässen Tag-Nachtsichtgerät können weiters Komponenten wie Strichplatten, z.B. zum Anzielen, oder weitere Messmittel, wie ein Laserentfernungsmesser, z.B. zum Messen der Entfernung zu einem Ziel, usw. eingebaut werden. Werden - wie bei der Integration eines Wärmebildsensors - neue Optik-Materialien (z.B. AMTIR) im Tag-Nachtsichtgerät eingesetzt, so bleibt die Funktion des Laserentfernungsmessers im Wesentlichen ungestört. Es sind auch weitere Aufnahmemittel, wie Kameras, für Bildaufnahmen ins Gerät einbindbar, ebenso Zusatzbeleuchter, wie ein Infrarot-Illuminator. Zum Einspielen von Informationen (externer Messmittel) in das Gerät sind kabellose Verbindungen oder Kabelverbindungen vorsehbar.

Das erfindungsgemässe Tag-Nachtsichtgerät wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

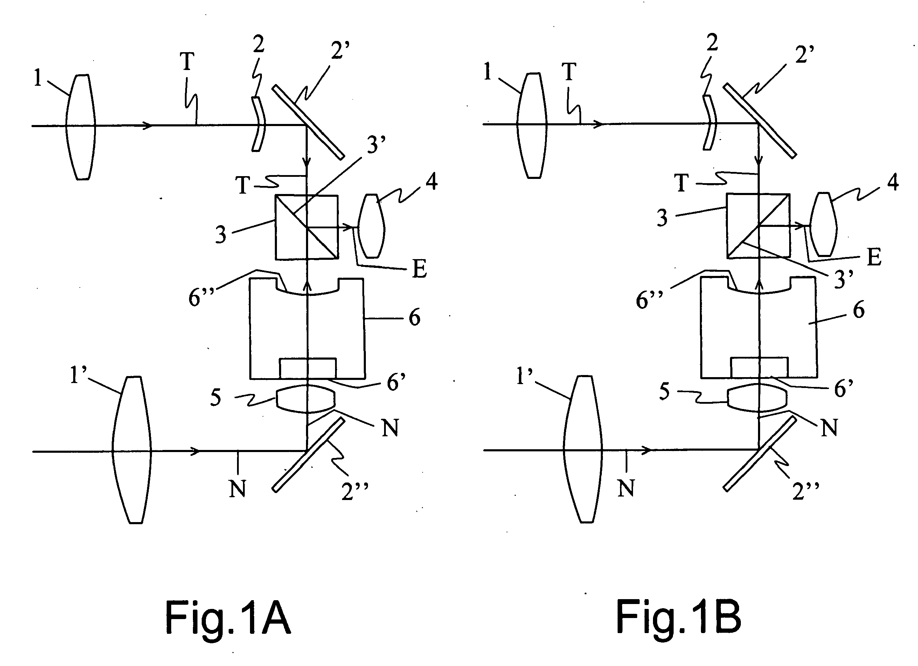

- Fig. 1A: schematisch den Aufbau einer Ausführungsform eines beispielhaften, nicht erfindungsgemässen Tag-Nachtsichtgerätes zur direkten Tag-Beobachtung,
- Fig. 1B: die Ausführungsform aus Fig. 1A zur direkten Nacht-Beobachtung,

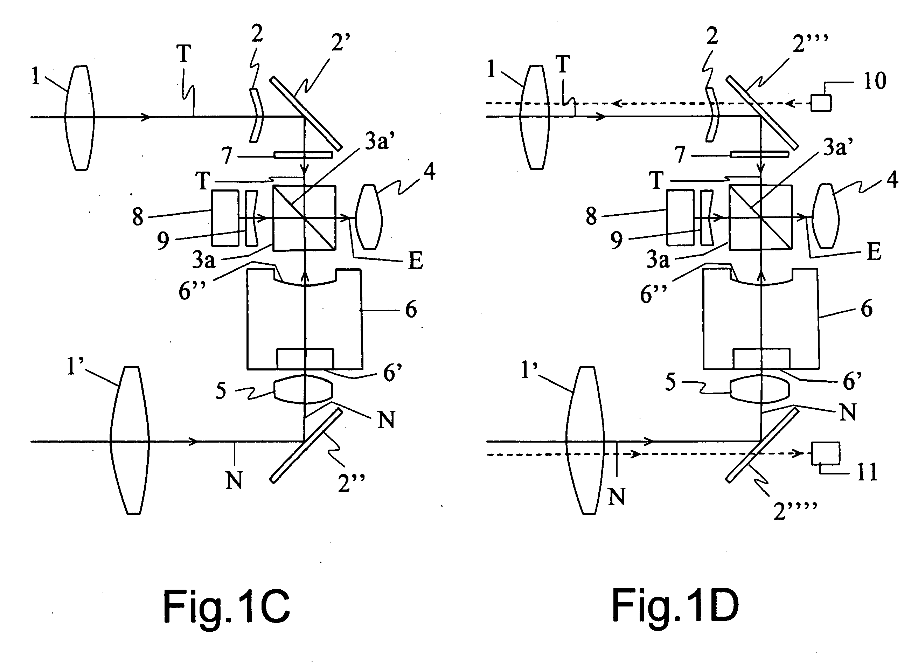

- Fig. 1C: schematisch den Aufbau einer Ausführungsform eines erfindungsgemässen Tag-Nachtsichtgerätes mit Strichplatte und graphischem Display,
- Fig. 1D: schematisch den Aufbau einer Ausführungsform eines erfindungsgemässen Tag-Nachtsichtgerätes mit Strichplatte, graphischem Display und Laserentfernungsmesser,

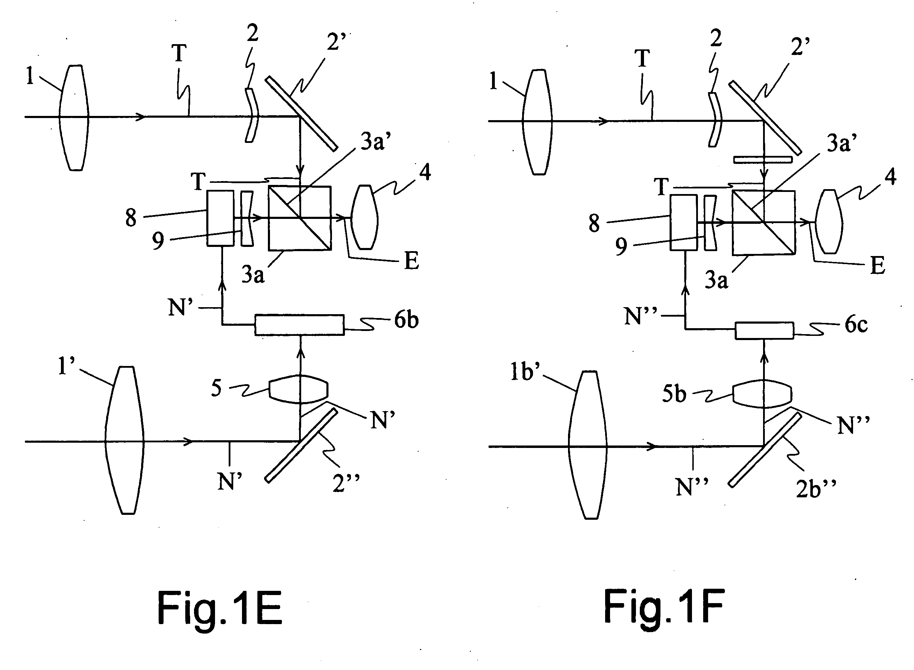

- Fig. 1E: schematisch den Aufbau einer Ausführungsform eines alternativen, nicht erfindungs gemäβen Tag-Nachtsichtgerätes mit einem EMCCD-Lichtverstärker,
- Fig. 1F: schematisch den Aufbau einer Ausführungsform eines alternativen, nicht erfindungs gemäβen Tag-Nachtsichtgerätes mit einem Wärmebildsensor, und

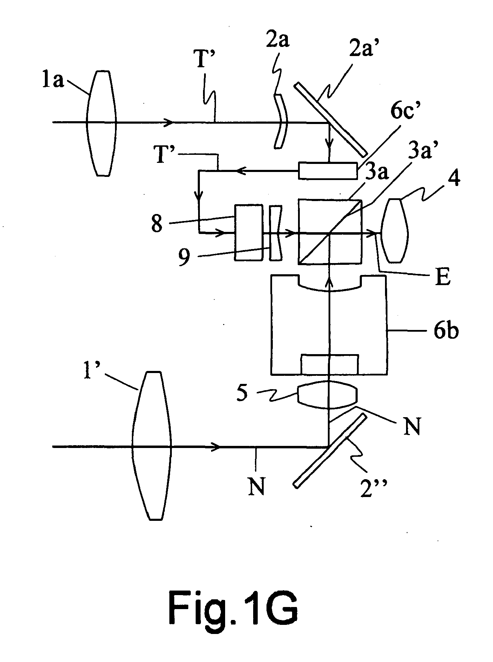

- Fig. 1G: schematisch den Aufbau einer Ausführungsform eines alternativen, nicht erfindungs gemäβen Tag-Nachtsichtgeräts mit einer im Tagsichtkanal angeordneten Wärmebild-Sensoreinheit.

Im Folgenden sind die erste und zweite Objektiveinheit 1,1a, 1',1b' und die Okulareinheit 4 in den Figuren 1A-1G symbolisch durch eine Linse dargestellt, werden aber im Allgemeinen aus einem Linsensystem gebildet sein. Tag- bzw. Nachtsichtkanal T,N, des Geräts sind in den Figuren 1A-1D, als - durch die jeweiligen ersten bzw. zweiten optischen Komponenten festgelegte - Anordnungen zum Übertragen von Strahlungsinformation zwischen der ersten bzw. zweiten Objektiveinheit 1,1' und dem Umlenkmittel definiert. In den Figuren 1E und 1F ist der Nachtsichtkanal N',N " zwischen zweiter Objektiveinheit 1',1b' und graphischem Display 8 festgelegt. Der Empfangskanal E entspricht in den Figuren dem Strahlengang zwischen Umlenkmittel und Okulareinheit 4.

Die wesentlichen Bauelemente eines beispielhaften, nicht erfindungsgemässen Tag-Nachtsichtgeräts sind aus Fig. 1A zu entnehmen. Im Tagsichtkanal T sind eine erste Objektiveinheit 1 und als erste optische Komponenten ein refraktives und ein reflektives optisches Element angeordnet. Die erste Objektiveinheit 1 sammelt von zu beobachtenden Objekten ausgehende Strahlen und fokussiert sie über das refraktive optische Element 2 auf das reflektive optische Element, hier ein erster Spiegel 2'. Der erste Spiegel 2' ist in einem Winkel - hier 45° - so angeordnet, dass die Strahlenbündel gegen ein Prisma 3 mit Reflexionsschicht 3' als Umlenkmittel reflektiert wird. In Fig. 1A ist das Prisma 3 so angeordnet, dass das Licht vom Tagsichtkanal T auf die Reflexionsschicht 3' trifft und in einen Empfangskanal E reflektiert wird. Über eine im Empfangskanal E angeordnete Okulareinheit 4 wird die Lichtinformation einem Beobachter als Tagsicht-Abbildung zugänglich gemacht. In dieser Darstellung ist eine reine - "direkte" - Tagbeobachtung möglich. Es sind hier (und ebenfalls in folgenden Figuren) auch Strahlen eingezeichnet, die nicht zum Beobachter gelangen - es versteht sich jedoch, dass diese Strahlen rein beispielhaft eingezeichnet sind und gegebenenfalls abgeblockt werden können bzw. nicht eingesammelt werden (z.B. durch einen Objektivdeckel).

Fig. 1B zeigt denselben schematischen Aufbau eines Tag-Nachtsichtgeräts wie Fig. 1A aber in der Anordnung für eine "direkte" Nachtbeobachtung. Der Nachtsichtkanal ist sozusagen "aktiviert", indem das Umlenk-Prisma um 180° um die optische Achse des Empfangskanals E gedreht ist. Das Prisma 3 ist nun derart angeordnet, dass über den Nachtsichtkanal N eintreffende Strahlung über die Reflexionsschicht 3' in den Empfangskanal E und weiters auf die Okulareinheit 4 gelenkt wird und als (direkte) Nachtsicht-Abbildung verfügbar ist. Analog zum Vorgehen in Fig. 1A wird von zu beobachtenden (nächtlichen) Objekten ausgehende Strahlung - oft auch als Restlicht bezeichnet - über eine zweite Objektiveinheit 1' oder ein Objektivsystem im Nachtsichtkanal N eingesammelt und auf einen zweiten Spiegel 2" geführt. An der Spiegelfläche werden die Lichtstrahlen in Richtung eines als Restlichtverstärker 6 ausgebildeten Bildsensors reflektiert. In den Figuren ist vor dem Restlichtverstärker 6 eine Linse 5 eingezeichnet, wiederum symbolisch für ein System zum Fokussieren der Strahlen auf ein Eintrittsfenster 6' des Restlichtverstärkers 6. Im Verstärker wird das Bild bzw. die Strahlung des beobachteten Objekts elektronisch verstärkt und erscheint als verstärktes sichtbares Bild am Austrittsfenster 6" des Restlichtverstärkers 6. Nach der Verstärkung trifft die Strahlung auf das Prisma 3 und wird zum Okularsystem gelenkt. In dieser Ausführungsform umfassen die zweiten optischen Komponenten des Nachtsichtkanals N den zweiten Spiegel 2" und die Linse 5.

In Fig. 1C ist der Aufbau eines erfindungsgemässen Gerätes mit einer Zusatzfunkion schematisch dargestellt mit einer Zusatzfunktion. Einmal ist im Gerät hier eine Strichplatte 7 angeordnet, die durch die durchtretenden Lichtstrahlen auf eine Beobachtungsebene abgebildet wird und z.B. zum Anzielen verwendbar ist. Die Strichplatte 7 oder mehrere Strichplatten können selbstverständlich an jeder geeigneten Stelle im Gerät angeordnet werden, wie z.B. auch auf oder unmittelbar nach dem Austrittsfenster 6" des Restlichtverstärkers 6. Dem Tag-Nachtsichtinstrument ist zusätzlich ein graphisches Display 8 als Komponente zur Bereitstellung von Zusatzinformation zugeordnet. In der Figur ist das graphische Display 8 mit einer Linse 9 vor dem Umlenkmittel positioniert. Vermittels der Linse 9 (bzw. einer Linsengruppe) wird das flache Bild des Displays zwecks Überlagerung an das Bild durch den Tag- oder Nachtsichtkanal T,N (die Tagsicht- oder Nachtsicht-Abbildung), welche - in der dargestellten Ausführung - gewisse Bildfehler aufweisen, verzeichnungsmässig angepasst. Von z.B. einer als weiteres Aufnahmemittel an das Gerät gekoppelten (bzw. in das Gerät integrierten) Wärmebildkamera aufgenommene Wärmebilder von Objekten oder von der Umgebung werden auf das graphische Display 8 eingespeist und über die Linse 9 (bzw. die Linsengruppe) und das Umlenkmittel als Zusatz-Bild in eine Beobachtungsebene projiziert. Die Anordnung der Komponenten sowie des Displays im Gerät ist insbesondere so gewählt, dass die auf unterschiedliche Weise beobachteten bzw. erstellten Bilder - in Fig. 1C sind das ein über den Tagsichtkanal T beobachtetes Tagbild und ein Wärmebild - auf der Beobachtungsebene, d.h. z.B. im Auge des Beobachters, gleich gross sind. So können die Bilder genau überlagert und als fusioniertes Bild betrachtet werden. Es versteht sich, dass in der Ausbildung mit der Zusatzfunktion das - hier - als Prismenelement 3a ausgebildete Umlenkmittel mit einer als für einen vorgegebenen Wellenlängenbereich- hier denjenigen des verwendeten Displays - durchlässigen Schicht 3a' ausgebildet ist.

Fig. 1D zeigt den Aufbau von Fig. 1C mit einem als weiteres Messmittel ins Tag-Nachtsichtgerät eingebauten Laserentfernungsmesser mit Lasersender 10 und Empfänger 11. Mittels des Distanzmessers kann in diesem Fall zur Entfernungsmessung zu Zielen über die erste Objektiveinheit 1 Laserstrahlung gegen das Ziel ausgesandt, über die zweite Objektiveinheit 1' wieder eingesammelt und mittels des Empfängers 11 detektiert werden. In diesem Ausführungsbeispiel sind der erste und zweite Spiegel 2',2" aus den Figuren 1A-1C als für den Wellenlängenbereich des Laserentfernungsmessers durchlässige Reflexionskomponenten 2''', 2'''' ausgebildet.

Die Anordnung des Distanzmessers in diesem Ausführungsbeispiel ist rein beispielhaft. Weiters kann mittels des Empfängers 11 bereits ein Distanzwert auswertbar sein, wobei der Wert gegebenenfalls auf das graphische Display 8 spielbar und weiter zum Beobachter projizierbar ist.

In Fig, 1E ist eine nicht erfindungs gemäβe Ausführungsform eines alternativen Tag-Nachtsichtgeräts gezeigt, in welcher Ausführungsform ein alternativer Bildsensor - ein EMCCD-Lichtverstärker 6b - im Gerät eingesetzt ist. Im Nachtsichtkanal N' empfangenes Licht wird zum EMCCD (Electron Multiplying Charge Coupled Device) projiziert und dort vielfach verstärkt. Die ausgelesene Information des EMCCD-Chips wird dann über das graphische Display 8 in den Empfangskanal E und zur Okulareinheit 4 geleitet. Die Beobachtung erfolgt also indirekt über das Display. In derselben Art und Weise ist anstelle des EMCCD-Lichtverstärkers 6b ein EBCMOS-Sensor (Electron Bombarded CMOS) als Lichtverstärker einsetzbar.

In dieser Ausführungsform kann über den Tag- und den Nachtsichtkanal T,N' gleichzeitig (Beobachtungs-) Information eingebracht werden. Beispielsweise wäre so auch die Einkopplung weiterer Messmittel durch Einkoppeln optischer Strahlen in den Tagsichtkanal T und weiter zum Okular möglich und damit die gleichzeitige Beobachtung dieser eingekoppelten Information und des - indirekten - Nachtsicht-Bildes.

Die Projektion einer Strichplatte auf die Abbildungs-/Beobachtungsebene erfolgt in dieser Ausführungsform, indem die Strichplatte auf dem graphischen Display 8 elektronisch dargestellt wird.

Fig. 1F zeigt eine weitere nicht erfindungs gemäβe Ausführungsform mit einem weiteren alternativen Bildsensor. Der Sensor ist hier als Wärmebildsensor 6c ausgebildet. In dieser Ausführungsform sind die optischen Komponenten des Nachtsicht-Kanals N''- wie Objektiveinheit 1b', Spiegel 2b'' und Linse 5b - als für Wärmestrahlung, z.B. für Wellenlängenbereiche 3µm bis 5µm oder 8µm bis 14µm, durchlässig bzw. reflektiv ausgebildet. Mittels des Wärmebildsensors 6c wird hier also ein Wärmebild der beobachteten Szene aufgenommen, auf das graphische Display 8 gespielt und über das Prismenelement 3a zur Okulareinheit 4 geführt. Dem Beobachter wird eine indirekte Nacht-Beobachtung der Szene ermöglicht. Weiters kann er gegebenenfalls gleichzeitig auch über den Tagsichtkanal T beobachten.

Die nicht erfindungs gemäβe Ausführungsform in Fig. 1G weist im Tagsichtkanal T', welcher hier als optischer Strahlengang zwischen erster Objektiveinheit 1a und graphischem Display 8 festgelegt ist, eine Wärmebild-Sensoreinheit 6c' als Sensoreinheit auf. In dieser Ausführungsform ist vom Beobachter ein mittels der Wärmebild-Sensoreinheit 6c' aufgenommenes Bild als "indirekte" Beobachtung über das graphische Display 8 wahrnehmbar. In dieser Ausführungsform sind die optischen Komponenten des Tagsichtkanals T' als für den entsprechenden Wellenlängenbereich der Wärmestrahlung durchlässig bzw. reflektiv ausgebildet. So kann einerseits über die Wärmebild-Sensoreinheit 6c' und das Display indirekt beobachtet werden und andererseits über den Nachtsichtkanal mit Restlichtverstärker 6b direkt. Mit entsprechend ausgelegten optischen Komponenten ist eine Bildfusion erreichbar. In dieser Ausführungsform wird im Tagsichtkanal empfangene Strahlung während der Nacht beobachtet.

Selbstverständlich ist hier anstelle eines Wärmebildsensors genauso ein anderer Sensor bzw. ein in einem anderen Wellenlängenbereich empfindlicher Sensor (mit entsprechend durchlässig/reflektiv ausgebildeten optischen Komponenten) einsetzbar. Diese Ausführungsform bietet beispielsweise auch die Möglichkeit, anstelle des Wärmebildsensors eine Kamera als weiteres Aufnahmemittel einzusetzen.

## Patentansprüche

1. Tag-Nachtsichtgerät zum Beobachten von Objekten mit
● einem Tagsichtkanal (T) mit
- einer ersten Objektiveinheit (1) und
- refraktiven und/oder reflektiven ersten optischen Komponenten(2,2',2''')
● einem Nachtsichtkanal (N) mit
- einer zweiten Objektiveinheit (1'),
- refraktiven und/oder reflektiven zweiten optischen Komponenten
- einem Bildsensor (2",2"") und einer Darstellungseinrichtung (6''),
● einem Zusatzkanal mit Komponenten, wie einem grafischen Display (8) zur Bereitstellung von Zusatzinformation als Zusatz-Bild,
● einem umlenkmittel (3a) und
● einem Empfangskanal (E) mit einer Okulareinheit (4),
**dadurch gekennzeichnet, dass**
das Umlenkmittel (3a) als teildurchlässiger Strahlteiler ausgebildet und um die optische Achse des Empfangskanals (E) drehbar ist, sodass durch das eine Umlenkmittel (3a) selektiv durch Drehen des Umlenkmittels
● Strahleninformation aus dem Tagsichtkanal (T), dem Nachtsichtkanal (N) und dem Zusatzkanal in den Empfangskanal (E) geleitet werden kann, sowie
● Strahleninformation aus dem Zusatzkanal mit Strahleninformation aus dem Nachtsichtkanal (N) und
● Strahleninformation aus dem Zusatzkanal mit Strahleninformation aus dem Tagsichtkanals (T) überlagerbar ist,
wobei
● die optische Verbindung vom Tagsichtkanal (T) und vom Nachtsichtkanal (N) jeweils zum Empfangskanal (E) ein- und ausschaltbar ist.

2. Tag-Nachtsichtgerät nach Anspruch 1, **dadurch gekennzeichnat, dass** das Umlenkmittel (3a) gemeinsam mit der Okulareinheit (4) um die optische Achse des Empfangskanals (E) drehbar ist.

3. Tag-Nachtsichtgerät nach Anspruch 1 oder 2, **dadurch gekenntzeichnet**, **dass** durch das Umlenkmittel (3a) selektiv Strahleninformation nur aus dem Zusatzkanal in den Empfangskanal (E) lenkbar ist.

4. Tag-Nachtsichtgerät nach einem der vorhergehenden Ansprüche, **dadurch gekennzeichnet, dass** durch Drehen des Umlenkmittel (3a) die optische Verbindung vom Tag- und Nachtsichtkanal (T,N) zum Empfangskanal (E) unterbrochen wird.

5. Tag-Nachtsichtgerät nach einem der vorhergehenden Ansprüche, **dadurch gekennaezahnet, dass** das Umlenkmittel (3a) als Prisma ausgebildet ist.

6. Tag-Nachtsichtgerät nach einem der vorhergehenden Ansprüche, **dadurch gekennzeichnet, dass** das Umlenkmittel (3a) als dichroitischer Strahlteiler ausgebildet ist.

7. Tag-Nachtsichtgerät nach einem der vorangehenden Ansprüche, **dadurch gekennzeichnet, dass** der Bildsensor (6)
- einen Restlichtverstärker oder
- einen EMCCD-Lichtverstärker oder
- einen EBCMOS-Lichtverstärker oder
- einen Wärmebildsensor
umfasst.

8. Tag-Nachtsichtgerät nach einem der vorangehenden Ansprüche, **dadurch gekenntzeichnet**, **dass**
- die erste und zweite Objektiveinheit (1, 1',),
- die ersten und zweiten optischen Komponenten (2,2'-2"")
- der Bildsensor
- das Umlenkmittel (6), und
- die Komponenten zur Bereitstellung von Zusatzinformation so ausgebildet und angeordnet sind, dass
- Tagsicht-Abbildung,
- Nachtsicht-Abbildung und
- Zusatz-Bild
in einer gemeinsamen Abbildungsebene in einem Grössenverhältnis 1:1:1 stehen.

9. Tag-Nachtsichtgerät nach einem der vorangehenden Ansprüche, **dadurch gekennzeichnet, dass** dem Tag-Nachtsichtgerät weitere Aufnahme- und/oder Messmittel, wie eine Kamera und/oder ein Laserentfernungsmesser (10,11) zugeordnet sind.

10. Tag-Nachtsichtgerät nach einem der vorangehenden Ansprüche, **dadurch gekennzeichnet, dass** im Tag- und/oder Nachtsichtkanal (T) oder gegebenenfalls im Empfangskanal (E) wenigstens eine Strichplatte (7) angeordnet ist.

11. Tag-Nachtsichtgerät nach Anspruch 10 wobei der Bildsensor (6) als Restlichtverstärker ausgebildet ist, **dadurch gekennzeichnet, dass** die Strichplatte (7) auf oder unmittelbar nach dem Austrittsfenster (6'') des Restlichtverstärkers angeordnet ist.

## Claims

1. Day/night-vision device for observing objects, having
● a day-vision channel (T) having
- a first objective unit (1) and
- refractive and/or reflective first optical components (2, 2', 2'''),
● a night-vision channel (N) having
- a second objective unit (1'),
- refractive and/or reflective second optical components (2'', 2''''),
- an image sensor (6) and a representation apparatus (6''),
● an additional channel with components, such as a graphic display (8), for providing additional information as an additional image,
● a deflection means (3a) and
● a reception channel (E) with an eyepiece unit (4),
**characterized in that**
the deflection means (3a) is configured as a partially transmissive beam splitter and is rotatable about the optical axis of the reception channel (E) such that, by means of the one deflection means (3a), it is possible by rotating the deflection means (3a) to selectively
● guide beam information from the day-vision channel (T), the night-vision channel (N) and the additional channel into the reception channel (E), and
● superpose beam information from the additional channel with beam information from the night-vision channel (N) and
● superpose beam information from the additional channel with beam information from the day-vision channel (T), wherein
● the optical connection from the day-vision channel (T) and from the night-vision channel (N) in each case to the reception channel (E) can be switched on and off.

2. Day/night-vision device according to Claim 1, **characterized in that** the deflection means (3a) is rotatable together with the eyepiece unit (4) about the optical axis of the reception channel (E).

3. Day/night-vision device according to Claim 1 or 2, **characterized in that**, by means of the deflection means (3a), beam information can be directed selectively only from the additional channel into the reception channel (E).

4. Day/night-vision device according to any one of the preceding claims, **characterized in that** by rotating the deflection means (3a), the optical connection from the daylight and night-vision channels (T, N) to the reception channel (E) is interrupted.

5. Day/night-vision device according to any one of the preceding claims, **characterized in that** the deflection means (3a) is configured as a prism.

6. Day/night-vision device according to any one of the preceding claims, **characterized in that** the deflection means (3a) is configured as a dichroic beam splitter.

7. Day/night-vision device according to any one of the preceding claims, **characterized in that** the image sensor (6) comprises
- a residual-light amplifier or
- an EMCCD light amplifier or
- an EBCMOS light amplifier or
- a thermal imaging detector.

8. Day/night-vision device according to any one of the preceding claims, **characterized in that**
- the first and second objective units (1, 1'),
- the first and second optical components (2, 2'-2''''),
- the image sensor (6),
- the deflection means (3a) and
- the components for providing additional information
are configured and arranged such that
- day-vision imaging,
- night-vision imaging and
- additional image
are located in a common imaging plane in a size ratio of 1:1:1.

9. Day/night-vision device according to any one of the preceding claims, **characterized in that** the day/night-vision device is assigned further recording and/or measurement means, such as a camera and/or a laser rangefinder (10, 11).

10. Day/night-vision device according to any one of the preceding claims, **characterized in that** at least one reticle (7) is arranged in the day-vision and/or night-vision channel (T, N) or if appropriate in the reception channel (E).

11. Day/night-vision device according to Claim 10, wherein the image sensor (6) is configured as a residual-light amplifier, **characterized in that** the reticle (7) is arranged on or directly behind the exit window (6") of the residual-light amplifier.

## Revendications

1. Appareil de vision diurne/nocturne pour observer des objets avec
● un canal de vision diurne (T) avec
- une première unité d'objectif (1) et
- des premiers composants optiques réfractifs et/ou réflectifs (2, 2', 2"'),
● un canal de vision nocturne (N) avec
- une seconde unité d'objectif (1'),
- des seconds composants optiques réfractifs et/ou réflectifs (2", 2""),
- un détecteur d'images (6) et un dispositif d'affichage (6"),
● un canal supplémentaire avec des composants, comme un affichage graphique (8), pour mettre à disposition des informations supplémentaires comme image supplémentaire,
● un moyen de déviation (3a) et
● un canal de réception (E) avec une unité d'oculaire (4),
**caractérisé en ce**
**que** le moyen de déviation (3a) est configuré comme un séparateur de faisceaux partiellement transparent et est rotatif autour de l'axe optique du canal de réception (E) si bien que, grâce à l'un moyen de déviation (3a), en tournant le moyen de déviation (3a), de manière sélective
● des informations de faisceau provenant du canal de vision diurne (T), du canal de vision nocturne (N) et du canal supplémentaire peuvent être dirigées dans le canal de réception (E)
ainsi que
● des informations de faisceau provenant du canal supplémentaire peuvent être superposées à des informations de faisceau provenant du canal de vision nocturne (N) et
● des informations de faisceau provenant du canal supplémentaire peuvent être superposées à des informations de faisceau provenant du canal de vision diurne (T),
cependant que
● la liaison optique du canal de vision diurne (T) et du canal de vision nocturne (N) respectivement avec le canal de réception (E) peut être branchée et débranchée.

2. Appareil de vision diurne/nocturne selon la revendication 1, **caractérisé en ce que** le moyen de déviation (3a) est rotatif conjointement avec l'unité d'oculaire (4) autour de l'axe optique du canal de réception (E).

3. Appareil de vision diurne/nocturne selon la revendication 1 ou 2, **caractérisé en ce que** des informations de faisceau provenant seulement du canal supplémentaire peuvent être dirigées de manière sélective par le moyen de déviation (3a) dans le canal de réception (E).

4. Appareil de vision diurne/nocturne selon l'une des revendications précédentes, **caractérisé en ce que** la liaison optique du canal de vision diurne et du canal de vision nocturne (T, N) vers le canal de réception (E) est interrompue par la rotation du moyen de déviation (3a).

5. Appareil de vision diurne/nocturne selon l'une des revendications précédentes, **caractérisé en ce que** le moyen de déviation (3a) est configuré comme un prisme.

6. Appareil de vision diurne/nocturne selon l'une des revendications précédentes, **caractérisé en ce que** le moyen de déviation (3a) est configuré comme un séparateur de faisceaux dichroïques.

7. Appareil de vision diurne/nocturne selon l'une des revendications précédentes, **caractérisé en ce que** le détecteur d'images (6) comprend
- un amplificateur de lumière résiduelle ou
- un amplificateur de lumière EMCCD ou
- un amplificateur de lumière EMCMOS ou
- un détecteur d'images par rayonnement thermique.

8. Appareil de vision diurne/nocturne selon l'une des revendications précédentes, **caractérisé en ce que**
- la première et la seconde unité d'objectif (1, 1'),
- les premiers et les seconds composants optiques (2, 2'-2""),
- le détecteur d'images (6),
- le moyen de déviation (3a) et
- les composants pour mettre à disposition des informations supplémentaires
sont configurés et placés de telle manière que
- la représentation de la vision diurne,
- la représentation de la vision nocturne et
- l'image supplémentaire
sont dans un plan de représentation commun dans un rapport de grandeur d'1:1:1.

9. Appareil de vision diurne/nocturne selon l'une des revendications précédentes, **caractérisé en ce que** d'autres moyens de prise de vues et/ou de mesure comme une caméra et/ou un télémètre laser (10, 11) sont affectés à l'appareil de vision diurne/nocturne.

10. Appareil de vision diurne/nocturne selon l'une des revendications précédentes, **caractérisé en ce qu'**au moins un réticule (7) est placé dans le canal de vision diurne et/ou nocturne (T, N) ou, le cas échéant, dans le canal de réception (E).

11. Appareil de vision diurne/nocturne selon la revendication 10, le détecteur d'images (6) étant configuré comme un amplificateur de lumière résiduelle, **caractérisé en ce que** le réticule (7) est placé sur ou directement après la fenêtre de sortie (6") de l'amplificateur de lumière résiduelle.
